# EUROPEAN PATENT APPLICATION

(11) **EP 4 549 119 A1**
(43) Date of publication of application: **07.05.2025**
(21) Application number: 23830924.9
(22) Date of filing: 26.05.2023
(51) Int. Cl.: B29B 17/02

(54) **COATING DETACHMENT MECHANISM AND COATING DETACHMENT DEVICE**

(30) Priority: 01.07.2022 JP 2022106831
(71) Applicant: Toray Industries, Inc., Tokyo 103-8666 (JP)
(72) Inventor: HIGASHIDA, Yoshihisa, Otsu-shi, Shiga 520-8558 (JP); TANINO, Kiyoshi, Otsu-shi, Shiga 520-8558 (JP); WATANABE, Hiromasa, Otsu-shi, Shiga 520-8558 (JP); WATANABE, Kazutaka, Otsu-shi, Shiga 520-8558 (JP)
(74) Representative: Hoefer & Partner Patentanwälte mbB
(86) International application number: PCT/JP2023/019709
(87) International publication number: WO 2024/004473

(57) **Abstract**

When a coating film removing mechanism of the present invention is used, it is possible to prevent reattachment of a removed substance to a base film when a coating film of a coated film is removed. A conveyance coating film removing mechanism of the present invention is a mechanism capable of continuously and stably removing a coating film from a base film with the coating film, the mechanism including a removing member that includes a tip portion coming into direct contact for removing the coating film, and a nozzle member disposed on an upstream side of the removing member in a film conveyance direction, the removing member and the nozzle member constituting a suction nozzle for sucking the removed coating film, and a side surface of the removing member on a downstream side in the film conveyance direction and a side surface of the nozzle member on an upstream side in the film conveyance direction being inclined so as to approach each other toward the tip portion.

## Description

### Field

The present invention relates to a coating film removing mechanism and a coating film removing equipment including the coating film removing mechanism.

### Background

While plastics are used in various fields, plastics are considered to be a cause of marine pollution such as microplastics, and there is an urgent need to reduce the environmental impact of plastics.

In recent years, with the evolution of Internet of Things (IoT), electronic devices such as CPUs mounted on computers and smartphones have increased, and accordingly, the number of multilayer ceramic capacitors (MLCCs) required for driving the electronic devices has also rapidly increased. A general method for producing this MLCC includes a step of forming a ceramic green sheet layer on a release film obtained by forming a release layer on a plastic base film, which is used as a carrier sheet, and a step of removing the ceramic green sheet layer to form a ceramic green sheet.

In this step, a release film from which a ceramic sheet is removed is discarded as an unnecessary material. That is, an increase in waste of a release film due to a rapid increase in the number of MLCCs in recent years has become an environmental problem, and efforts for reusing plastic substrate films have been activated.

In order to reuse the discarded release film, a recycled film may be obtained by collecting/pulverizing/forming a resin chip, and then remelting to form a film.

However, since a component of a release layer contained in a release film generally has a composition different from a component constituting a base film from the viewpoint of releasability, when a release film with a release layer is pulverized to form a resin chip and then remelted to form a film, it is difficult to stably form a film because the component of the release layer exists as a foreign substance.

In addition, even if a film can be formed, since a release layer exists as a foreign substance in the obtained film, quality deterioration cannot be avoided due to coloration of the film or a change in surface composition, and the film cannot be recycled into a film having a quality equivalent to that of the original base film.

Therefore, in order to recycle a release film as a recycled film, it is necessary to remove the component of a release layer contained in the release film to a very small amount of residue at a level that causes no problem in quality of the recycled film.

As a method for removing a coating film from a coated film surface, Patent Literature 1 discloses a method in which a rotating brush having metal fiber bristles as a removing member is brought into direct contact with a coating film on a film surface while being rotated to remove the coating film, and a plurality of suction nozzles are placed in a circumferential direction of the rotating brush in order to remove a coating film piece (hereinafter, removed substance) attached to the rotating brush.

Patent Literature 2 discloses, as a method for removing a foreign substance on a film surface, a method for collecting and removing a foreign substance by wetting a rotating rod member with a solvent and then bringing the rod member into contact with a film surface to attach the foreign substance to an outer peripheral surface of the rod member. Further, in order to prevent the foreign substance attached to the outer peripheral surface of the rod member from being reattached to the film from the rod, a suction nozzle provided with a slit portion capable of reducing the pressure for removing the foreign substance from the outer peripheral surface of the rod member is disclosed.

### Citation List

### Patent Literature

Patent Literature 1: JP 2012-171276 A
Patent Literature 2: JP S62-60749 A

### Summary

### Technical Problem

In the method of Patent Literature 1, since the rotating brush is brought into direct contact with the coated film so as to press the rotating brush against the coated film, the bending of the bristles of the rotating brush after contact with the coated film is released, and the removed substance attached to the bristles is easily scattered around and may be reattached to the film. In order to improve the removing performance of the coating film, it is necessary to strongly press the rotating brush against the coated film and to rotate the rotating brush at a high speed, and therefore it is easily assumed that the removed substance is significantly scattered. In order to collect the removed substance, suction nozzles are placed before and after the brush, but the positional relationship between the suction nozzles and a removed part is not described in detail. Further, the suction nozzle itself is not mentioned. If the suction nozzles are to be brought close to each other, it is necessary to place the suction nozzles between the rotating brush and the film to be conveyed, but since both are moving, the suction nozzles need to be placed at a certain distance from both, and cannot be brought close to each other. That is, the removed coating film piece cannot be sufficiently collected and removed, and the removed substance cannot be prevented from being reattached to the film, and the quality of the recycled film deteriorates.

In addition, in the method of Patent Literature 2, the removed substance is removed by being transferred to the outer peripheral surface after being removed once by the rod member, but when the rod rotates at a high speed, the removed substance may be scattered around and reattached to the film. In addition, the transferred removed substance falls on a holding member of the rod member, and the position where the removed substance falls is right beside the opening portion in a slit shape, that is, the position of the edge of the opening portion. When the edge of the opening portion is compared with the immediately above the opening portion, the suction wind speed can be increased immediately above the opening portion where the suction airflow goes straight. However, at the edge of the opening portion, there is no suction airflow that goes straight, and an airflow drawn from the surroundings acts, and therefore, the suction wind speed is significantly reduced. That is, the suction removal performance for the removed substance is lowered at the edge of the opening portion, the removed substance cannot be sufficiently collected and removed, and as a result, the removed substance remains on the rod member, and the quality of the recycled film deteriorates. Further, since the internal shape of the slit is formed with a constant gap up to the bottom, a flow in the film width direction cannot be sufficiently formed inside the suction nozzle. That is, for a wide film, a uniform suction wind speed cannot be obtained in the film width direction. That is, the suction wind speed particularly increases at a place to which a suction device such as a blower or a vacuum pump is connected, and the suction wind speed decreases at a place far from the place to which the suction device is connected in the film width direction to cause a problem that the suction removal performance for the removed substance is insufficient.

Therefore, the present invention provides, as a mechanism for removing a coating film from a base film with the coating film, a coating film removing mechanism that can prevent the removed substance from being reattached to the film to cause contamination by reliably sucking and removing the removed substance while preventing scattering and deposition of the removed substance, and can stably remove the coating film continuously for a long time. Solution to Problem
[1] A coating film removing mechanism according to the present invention to solve the object is a mechanism for removing a coating film from a coated film that includes the coating film on at least one surface of a base film and is conveyed. The mechanism comprises: a removing member that includes a tip portion extending in a film width direction, and is for removing the coating film by bringing the tip portion into contact with the coated film; and a nozzle member disposed on an upstream side of the removing member in a film conveyance direction. The removing member and the nozzle member constitute a suction nozzle that sucks the coating film removed by the tip portion, and a side surface of the removing member on a downstream side in the film conveyance direction and a side surface of the nozzle member on an upstream side in the film conveyance direction are inclined so as to approach each other toward the tip portion.
   The coating film removing mechanism according to the present invention is preferably any one of the following aspects [2] to [5].
[2] The coating film removing mechanism according to [1], wherein the suction nozzle includes: an opening portion that extends in the film width direction and is opened in a vicinity of the tip portion; a slit portion that extends in the film width direction and is a flow path communicating with the opening portion; and a decompression chamber that is a space having a larger cross-sectional area perpendicular to a suction direction than the slit portion.
[3] The coating film removing mechanism according to [2], wherein the suction nozzle forms the opening portion, the slit portion, and the decompression chamber with the nozzle member and a side surface of the removing member on the upstream side in the film conveyance direction.
[4] The coating film removing mechanism according to [2], further including a spacer member between the removing member and the nozzle member, wherein the nozzle member, the spacer member, and a side surface of the removing member on the upstream side in the film conveyance direction form the opening portion, the slit portion, and the decompression chamber.
[5] The coating film removing mechanism according to any one of [2] to [4], wherein an opening width of the opening portion in the film width direction is 4% to 150% with respect to a film width of the coated film to become a target for removing.
[6] The coating film removing mechanism according to [3], wherein an angle formed by the coated film and the side surface of the removing member on the upstream side in the film conveyance direction is 30° to 120°.
[7] A coating film removing equipment according to the present invention comprises: an unwinding device for unwinding the coated film wound in a roll; a winding device for winding the base film with the coating film removed; and the coating film removing mechanism according to any one of [1] to [6], the coating film removing mechanism being placed between the unwinding device and the winding device and being for removing the coating film from the coated film to be conveyed.

### Advantageous Effects of Invention

When the coating film removing mechanism of the present invention is used, in the case of removing a coating film of a base film with the coating film, it is possible to stably and continuously remove the coating film without reattachment of the removed coating film to the base film.

### Brief Description of Drawings

FIG. 1 is a schematic view of a coating film removing equipment of the present invention.
FIG. 2 is a schematic cross-sectional view of the coating film removing mechanism used in FIG. 1.
FIG. 3 is a perspective view of the inside of the coating film removing mechanism in FIG. 2.
FIG. 4 is a perspective view of the inside of the coating film removing mechanism of the present invention according to a different aspect from FIG. 3.
FIG. 5 is a schematic top view of the coating film removing mechanism illustrated in FIG. 2.
FIG. 6 is a schematic top view of a coating film removing mechanism of the present invention according to a different aspect from FIG. 5.
FIG. 7 is a schematic view illustrating a conveyance direction speed vector of a coated film and a suction direction speed vector of a suction nozzle in the coating film removing mechanism illustrated in FIG. 2.
FIG. 8 is a schematic view illustrating a conveyance direction speed vector of a coated film and a suction direction speed vector of a suction nozzle in the coating film removing mechanism of the present invention according to a different aspect from FIG. 2.

### Description of Embodiments

Hereinafter, embodiments of the present invention will be described with reference to the drawings. Note that the following description exemplifies one of the embodiments according to the present invention, and the present invention is not limited thereto, and various modifications can be made without departing from the gist of the present invention.

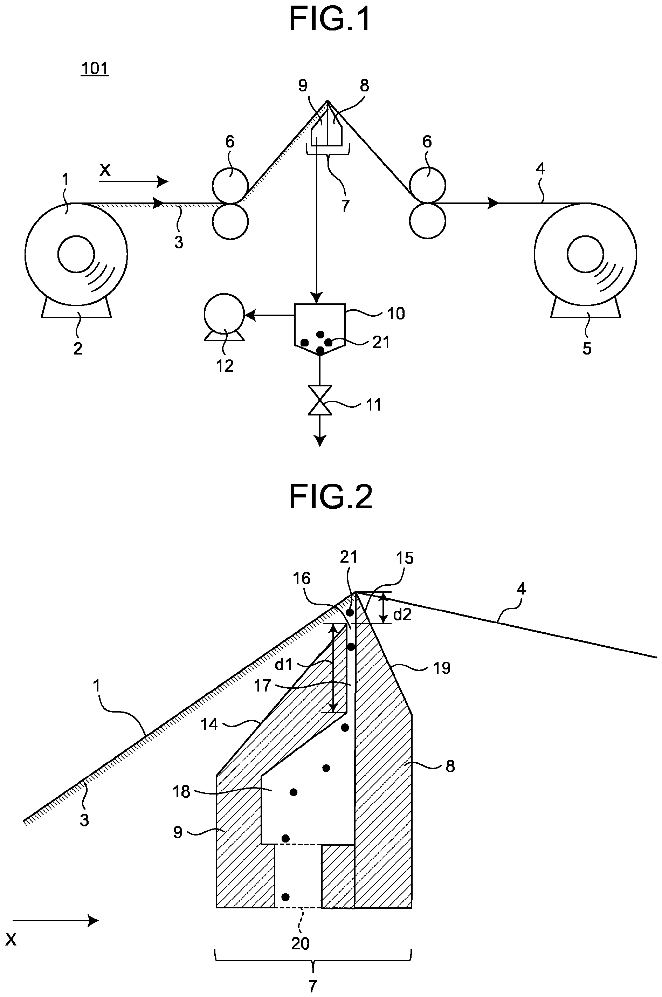

FIG. 1 is a schematic view of a coating film removing equipment 101 of the present invention. The coating film removing equipment 101 includes an unwinding device 2 that unwinds a film 1 (hereinafter, sometimes referred to as a coated film) including a coating film 3 on one surface of a base film 4, a winding device 5 that winds the base film 4 after the coating film 3 on the surface of the coated film 1 is removed, and a conveyance device 6 that conveys the film in a direction of an arrow X in a state where a tension is applied to the film. Further, a coating film removing mechanism 7 for removing the coating film 3 from the coated film 1, and sucking a removed substance 21 having been removed and discharging it to the outside of the equipment is provided between the unwinding device 2 and the winding device 5. The coating film removing mechanism 7 includes a removing member 8 for removing the coating film 3 by coming into direct contact with the surface of the coating film 3 of the coated film 1, and a nozzle member 9 on the upstream side of the removing member 8 in the film conveyance direction. The removing member 8 and the nozzle member 9 are fastened to each other and extend in the width direction of the base film 4. The fastening of the removing member 8 and the nozzle member 9 constituting the coating film removing mechanism 7 may be, for example, fastening and fixing using a bolt or a clamp, but is not limited thereto. The coating film removing mechanism 7 is connected to a tank 10 for primarily storing the removed substance 21 after removing, and it is possible to suck the removed substance 21 after removing by the coating film removing mechanism 7 by connecting a suction device 12 to the tank 10.

Next, the coating film removing mechanism 7 of the present invention will be described in detail with reference to FIG. 2. FIG. 2 is a central cross-sectional view of the coating film removing mechanism 7 used in FIG. 1 in the film width direction. By disposing the nozzle member 9 on the upstream side and the removing member 8 on the downstream side in the conveyance direction (arrow X) of the coated film 1, an opening portion 16 is formed to constitute a suction nozzle that sucks and removes the removed substance 21. By constituting the suction nozzle by the nozzle member 9 and the removing member 8, the removed substance 21 removed by the removing member 8 can be immediately sucked and removed.

The removing member 8 includes a tip portion 15 that extends in the film width direction and comes into contact with the coated film 1. A side surface 14 of the nozzle member 9 on the upstream side and a side surface 19 of the removing member 8 on the downstream side are inclined so as to approach each other toward the tip portion 15. With such a shape, the nozzle member 9 can be placed without being in contact with the coated film 1, and the removing member 8 can be placed without being in contact with the base film 4. In order to reliably remove the coating film 3 from the coated film 1, it is necessary to strongly press the tip portion 15 against the coated film 1, so that the angle formed by the coated film 1 and the base film 4 needs to be small. According to the aspect of the coating film removing mechanism 7 of the present invention, the coating film removing mechanism 7 can be placed even when the angle formed by the coated film 1 and the base film 4 is small. Further, the position of the opening portion 16 can be brought close to the tip portion 15. As a result, the removed substance 21 can be immediately sucked and removed, and therefore the coating film can be stably and continuously removed without either depositing the removed substance 21 on the removing member 8 or scattering around after deposition.

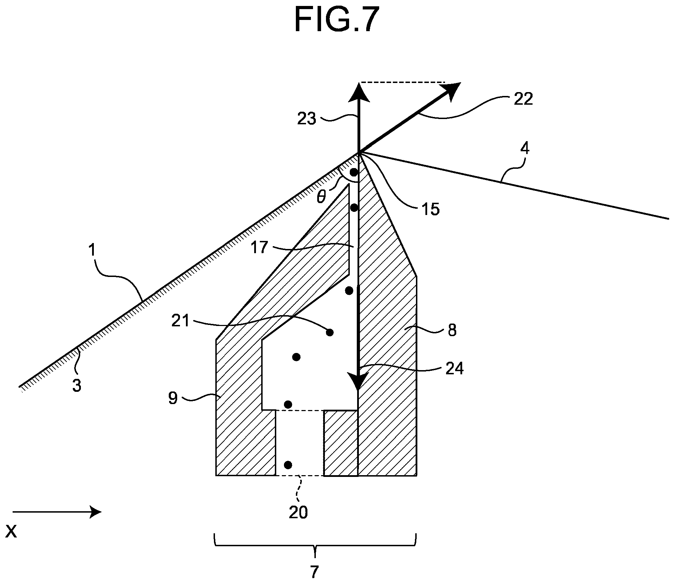

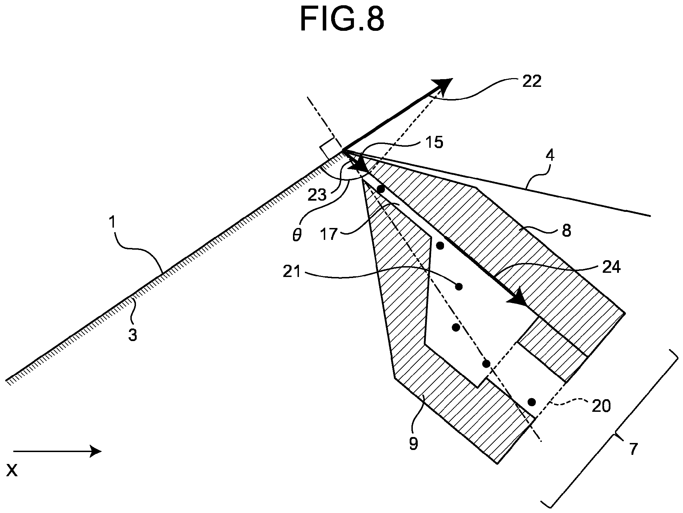

Next, the fluidity of the removed substance 21 in the coating film removing equipment 101 of the present invention will be described with reference to FIGS. 7 and 8.

FIG. 7 is a schematic view illustrating a conveyance direction speed vector 22 of the coated film 1 and a suction direction speed vector 24 of the suction nozzle in the coating film removing mechanism 7 illustrated in FIG. 2. As illustrated in FIG. 7, a vector component 23, which is a component of the conveyance direction speed vector 22 in the suction direction, is opposite in direction to the suction direction speed vector 24 generated by the suction mechanism 12. This is a direction in which the fluidity of the removed substance 21 in the suction direction is reduced, which leads to a reduction in suction efficiency. Therefore, the vector component 23 is preferably small.

The vector component 23 increases or decreases depending on the angle θ formed by the coated film 1 and the side surface of the removing member 8 on the upstream side in the film conveyance direction, or the direction thereof is reversed, but in order to reduce the vector component 23 directed upward, the angle θ formed by the coated film 1 and the side surface of the removing member 8 on the upstream side may be increased.

FIG. 8 is a schematic view illustrating the conveyance direction speed vector 22 of the coated film 1 and the suction direction speed vector 24 of the suction nozzle in the coating film removing mechanism 7 of the present invention according to a different aspect from FIG. 2. In FIG. 8, from FIG. 2, the coating film removing mechanism 7 is disposed such that the angle θ formed by the coated film 1 and the side surface of the removing member 8 on the upstream side is larger than 90°.

When the angle θ formed by the coated film 1 and the side surface of the removing member 8 on the upstream side exceeds 90°, the vector component 23 is directed in the same direction as the suction direction speed vector 24, and a vector obtained by adding these acts on the removed substance 21, and the fluidity of the removed substance 21 is improved, so that the suction efficiency is increased.

Next, the removability in the coating film removing equipment 101 of the present invention will be described.

In order to reliably remove the coating film 3 from the coated film 1, it is necessary to strongly press the tip portion 15 against the coated film 1. In order to realize this, as described above, it is effective to reduce the angle formed by the coated film 1 and the base film 4. Further, as another method, it is also effective to increase the tension applied to the film.

From the above, in order to achieve both the fluidity and the removability of the removed substance 21, the angle θ formed by the coated film 1 and the side surface of the removing member 8 on the upstream side is preferably 30° to 120°.

At this time, if the angle formed by the coated film 1 and the base film 4 increases and deterioration of removability is concerned, it is preferable to increase the tension applied to the film and strongly press the tip portion 15 against the coated film 1.

The angle θ formed by the coated film 1 and the side surface of the removing member 8 on the upstream side is more preferably 30° to 90°. In this range, the vector component 23 is directed upward as illustrated in FIG. 7, but its size is small (0 at 90°), and it can be considered that there is little influence on the decrease in fluidity of the removed substance 21, and the angle formed by the coated film 1 and the base film 4 can also be reduced, so that the removability does not deteriorate.

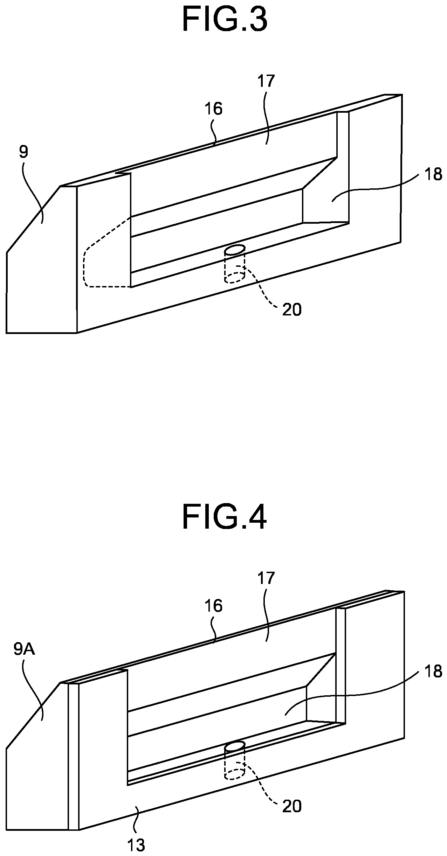

Next, the internal structure of the coating film removing mechanism 7 will be described with reference to FIGS. 2 and 3. FIG. 3 is a perspective view of the inside of the coating film removing mechanism 7 in a state where the removing member 8 is removed from the coating film removing mechanism 7. The suction nozzle including the nozzle member 9 and the removing member 8 includes an opening portion 16, a slit portion 17, and a decompression chamber 18, and the opening portion 16, the slit portion 17, and the decompression chamber 18 communicate with each other. In addition, a pipe connection portion 20 is provided below the decompression chamber 16, and is connected to the tank 10 from the viewing connection portion 20 via a pipe. It is preferable that the slit portion 17 from the opening portion 16 to the decompression chamber 18 is designed to have a high pressure loss at the place by forming a narrow flow path, and is conversely designed to have a low pressure loss at the place by increasing the volume of the decompression chamber 18, which is a space having a larger cross-sectional area perpendicular to the suction direction than the slit portion 17. This can make it easier to generate an airflow in the film width direction in the decompression chamber 18, so that the suction wind speed generated in the opening portion 16 can be made substantially uniform in the film width direction. The gap of the slit portion 17 in the conveyance direction, the length of the slit portion 17 from the opening portion 16 to the decompression chamber 18, and the volume of the decompression chamber 18 may be appropriately optimized according to the properties of the removed substance to be generated. For example, when the removed substance 21 has no fluidity and is likely to clog the narrow flow path of the slit portion 17, it is preferable to widen the gap of the slit portion 17 or shorten the length of the slit portion 17. In a case where the gap of the slit portion 17 is widened or the length of the slit portion 17 is shortened, the suction wind speed generated in the opening portion 16 becomes non-uniform in the film width direction, and therefore it is preferable to make an appropriate adjustment so that the suction wind speed is substantially uniform by increasing the volume of the decompression chamber 18.

In the embodiment in FIG. 3, the pipe connection portion 20 is disposed at the center of the nozzle member 9 in the film width direction, but the present invention is not limited thereto, and it may be provided at an end portion or a plurality of pipe connection portions may be provided.

Next, another embodiment of the coating film removing mechanism 7 of the present invention is illustrated in FIG. 4. In the embodiment in FIG. 4, a slit portion 17 is formed by sandwiching a spacer member 13 between a nozzle member 9A and a removing member 8 in which the slit portion 17 is not formed instead of forming the flow path of the slit portion 17 in the nozzle member 9 as in the embodiment in FIG. 3. With this configuration, the gap of the slit portion 17 and the opening width of the opening portion 16 in the film width direction can be freely changed by the spacer member 13. That is, when the film width of the coated film 1 varies, the opening width can be easily changed to an appropriate opening width.

In either of the embodiments in FIGS. 3 and 4, the nozzle member 9 is placed on the side surface of the removing member 8 on the upstream side in the film conveyance direction, and the wall surface of the removing member 8 is configured as one of the internal wall surfaces of the coating film removing mechanism 7, so that it is possible to eliminate a step generated when a general-purpose suction nozzle is attached to the removing member 8 or a joint of members. As a result, even when the removed substance 21 has high viscosity, the removed substance 21 does not deposit inside the coating film removing mechanism 7, and the removed substance 21 can be more efficiently sucked.

### [Opening width of opening portion]

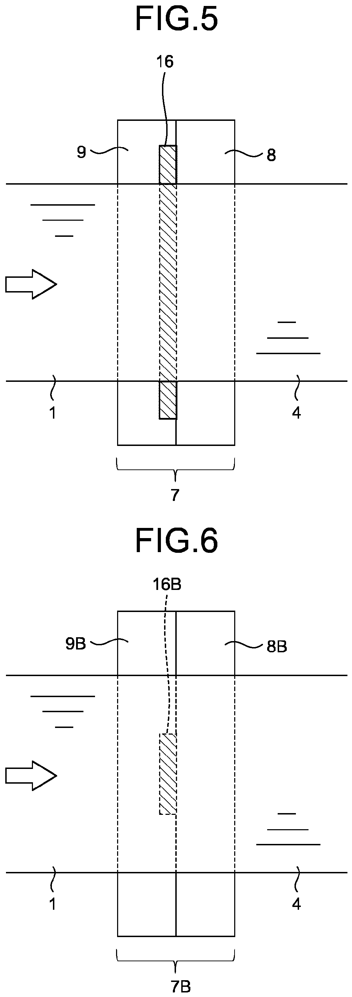

FIG. 5 is a schematic top view of a state where the coating film 3 is removed from the coated film 1 in the coating film removing mechanism 7 illustrated in FIG. 2 as viewed from above through the film. The opening portion 16 extends in the film width direction, and its opening width is wider than the width of base film 4. Since the opening portion 16 extends in the film width direction, the removed substance 21 removed by the removing member 8 can be immediately sucked in the entire width of the film. Further, even when the coated film 1 meanders in the film width direction, the removed substance 21 can be immediately sucked within the range of the opening width because the opening width is wider than the width of the base film 4. On the other hand, when the opening width is too wide with respect to the film width, since air is preferentially sucked from the opening portion 16 on the outer side of the film width, the ability to suck the removed substance 21, which is essential, deteriorates. As a result of intensive studies on the opening width by the inventors, it has been verified that the removed substance 21 can be immediately sucked by setting the opening width of the opening portion 16 to 150% or less with respect to the film width of the coated film 1 to become a target for removing. When the opening width exceeded 150% with respect to the film width, it was difficult to suck the removed substance 21.

FIG. 6 is a schematic top view of the coating film removing mechanism of the present invention according to a different aspect from FIG. 5, and is a schematic top view illustrating a coating film removing mechanism 7B in which the opening width of an opening portion 16B is narrower than the film width. The coating film removing mechanism 7B illustrated in FIG. 6 is suitable when the fluidity of a removed substance 21 removed by a removing member 8B is high, and is particularly suitably used, for example, when a coating film containing a cleaning liquid or the like is removed. When the removed substance 21 has fluidity, the removed substance 21 flows in the film width direction to the opening portion 16B while running along the removing member 8B, and therefore even if the coated film 1 meanders in the film width direction, the removed substance 21 can be sucked and removed. In addition, since the opening area of the opening portion 16B is narrowed, the suction wind speed or the suction pressure in the opening portion 16B can be increased, and the suction and removal can be more efficiently performed. On the other hand, when the opening width is too narrower than the film width, the entire amount of the removed substance 21 removed by the removing member 8B cannot be completely sucked, and the opening portion 16B may be clogged. As a result of studies on the opening width by the inventors, it has been verified that the removed substance 21 can be sucked and removed by setting the opening width of the opening portion 16B to 4% or more with respect to the film width of the coated film 1 to become a target for removing. In the case of being narrower than that, a phenomenon that the removed substance 21 blocks the opening portion 16B was sometimes observed.

It is preferable that the tank 10 (see FIG. 1) connected from the pipe connection portion 20 of the coating film removing mechanisms 7 and 7B can not only accumulate the removed substance 21 sucked by the suction device 12 but also discharge the removed substance from a discharge port 11 to the outside after the operation of the equipment is stopped or during continuous operation. By accumulating the removed substance 21 in the tank 10 and appropriately discharging the removed substance 21 from the discharge port 11 of the tank 10, the removed substance 21 does not flow into the suction device 12, and failure of the suction device 12 can be prevented.

Next, a method for sucking and removing a removed substance using the coating film removing equipment 101 will be described in detail with reference to FIGS. 1 and 2.

The coated film 1 is set in the coating film removing equipment 101, and is conveyed from the unwinding device 2 to the winding device 5. When the coated film 1 is conveyed and passes through the coating film removing mechanism 7, the coating film 3 on the surface of the coated film 1 comes into contact with the tip portion 15 of the removing member 8, so that the coating film 3 is removed. After the coating film 3 is removed, the coating film 3 is sucked from the opening portion 16 of the coating film removing mechanism 7 as the removed substance 21. The removed substance 21 passes through the slit portion 17 from the opening portion 16, moves to the decompression chamber 18 and the pipe connection portion 20, and is accumulated in the tank 10. At this time, since the wind speed of the air sucked from the opening portion 16 is uniform suction wind speed in the width direction of the film, the removed substance 21 generated in the entire width of the film can be sucked in the opening portion 16.

When the coating film 3 of the coated film 1 includes a coating film of a water-soluble resin, a cleaning liquid may be applied to the coating film 3 of the coated film 1 to be conveyed before the coating film 3 is brought into contact with the tip portion 15. By applying the cleaning liquid, the removing performance may be significantly improved. As a cleaning liquid applying device (not illustrated), a water tank that stores water as a cleaning liquid may be provided on the upstream side of the coating film removing mechanism 7 in the film conveyance direction, and a device that immerses the coated film 1 in cleaning water or directly applies a cleaning liquid to the surface of the coated film 1 may be provided. Examples of the device that directly applies a cleaning liquid include a high-pressure cleaning machine, a shower nozzle, a spray nozzle, and a steam nozzle. The cleaning liquid may be sucked together with the removed substance 21 by the coating film removing mechanism 7, and it is preferable that both the cleaning liquid and the removed substance 21 are accumulated in the tank 10 and discharged to the outside after the operation of the equipment is stopped or during continuous operation. In the case of discharging, it is more preferable to have a mechanism capable of separating the removed substance 21 which is a solid and the cleaning liquid which is a liquid. The cleaning liquid can be accumulated in the tank 10, and therefore in the same manner as the accumulation of the removed substance 21, the suction device 12 can be prevented from directly sucking the cleaning liquid, and failure of the suction device 12 can be prevented.

In the coating film removing equipment 101 illustrated in FIG. 1, the pipe connection portion 20 has one connection point, but may have a plurality of connection points. In the case of connecting pipes at a plurality of points, the suction air volume is larger than that in the case of one point, and the suction wind speed can be increased. On the other hand, when the removed substance 21 has a property of being continuous in a string shape, each of the plurality of pipe connection points sucks the removed substance 21 in a string shape, and as a result, the removed substance 21 may be accumulated inside the coating film removing mechanism 7.

In the above embodiment, the case where the coating film 3 is removed from the coated film 1 including the coating film 3 on one surface of the base film 4 has been described, but the same can be carried out even when the coating film 3 is removed from the coated film 1 including the coating film 3 on both surfaces of the base film 4. In the case of including the coating film 3 on both surfaces of the base film 4, the coating film 3 on one surface of the coated film 1 may be removed by the coating film removing mechanism 7, and then the coating film 3 on the other surface of the coated film 1 may be removed by another coating film removing mechanism 7 after the coated film 1 is turned upside down.

### [Examples]

Hereinafter, the present invention will be described with reference to Examples, but the present invention is not necessarily limited thereto.

### <Base film with coating film (coated film)>

On a base film of polyethylene terephthalate having a thickness of 30 µm and a width of 200 mm, a polyvinyl alcohol resin as a water-soluble resin was formed to have a film thickness of 0.1 µm, and a curable silicone resin as a release component was further formed thereon to have a film thickness of 0.1 µm to prepare a coated film 1.

### [Example 1]

The coated film 1 was set in the unwinding device 2 of the coating film removing equipment 101. The conveyance speed was set to 50 m/min, and coating film removing from the coated film 1 was performed while applying water in an amount of 0.1 L/m² as a cleaning liquid to the surface of the coating film 3 of the coated film 1 using a spray nozzle as a cleaning liquid applying device from a position spaced 400 mm apart on the upstream side of the coating film removing mechanism 7 in the film conveyance direction.

In the coating film removing mechanism 7, the length of the tip portion 15 in the film width direction was set to 500 mm, the opening width of the opening portion 16 and the width of the slit portion 17 were set to 200 mm, the gap of the slit portion 17 was set to 2 mm, and the length (d1) of the slit portion 17 in the vertical direction in FIG. 2 was set to 3 mm. The center positions in the film width direction of the tip portion 15 and the opening portion 16 were matched with each other. The position (d2) of the opening portion 16 was set to close to the tip portion 15 of the removing member 8 at a distance of 3 mm.

The angle θ formed by the coated film 1 and the side surface of the removing member 8 on the upstream side was set to 45°, and the angle formed by the coated film 1 and the base film 4 was set to 90°.

A ring blower (VFC608Z manufactured by TERAL INC.) was connected as the suction device 12, the suction wind speed at the opening portion 16 was set to 6 m/s, and the device was kept in continuous operation during coating film removing. The suction wind speed was measured using Climomaster (MODEL 6501-C0, manufactured by KANOMAX CORPORATION) in a state where the heights of the opening portion 16 and the tip portion 15 of the removing member 8 were matched and the base film was not in contact with the tip portion 15.

While the coated film 1 was conveyed for 10 minutes, it was checked that the removed substance 21 removed from the coated film 1 could be immediately sucked without depositing the removed substance 21 on the removing member 8 or clogging the opening portion 16. In addition, although meandering of the coated film 1 occurred up to 10 mm in the film width direction, since the removed substance 21 containing water had fluidity, it could be verified that the removed substance 21 flowed in the film width direction and was sucked in the opening portion 16 without any problem, and there was no appearance that the removed substance 21 was reattached to the end portion of the base film 4 in 10 minutes. When the film wound by the winding device 5 was analyzed using SEM-EDX, no component of the removed substance 21 was detected.

### [Example 2]

The opening width of the opening portion 16 and the width of the slit portion 17 of the coating film removing mechanism 7 were each set to 300 mm. The other conditions were set in the same manner as in Example 1, and coating film removing was performed. The coated film 1 was conveyed for 10 minutes, and meandering of the coated film 1 occurred up to 10 mm in the film width direction. However, it could be verified that the removed substance 21 removed from the coated film 1 could be immediately sucked without depositing the removed substance 21 on the removing member 8 or clogging the opening portion 16 of the coating film removing mechanism 7, and there was no appearance that the removed substance 21 was reattached to the end portion of the base film 4. When the film wound by the winding device 5 was analyzed using SEM-EDX, no component of the removed substance was detected.

### [Example 3]

The width of each of the opening portion 16 and the slit portion 17 of the coating film removing mechanism 7 was set to 8 mm. The other conditions were set in the same manner as in Example 1, and coating film removing was performed. The coated film was conveyed for 10 minutes, and meandering of the coated film 1 occurred up to 10 mm in the film width direction. However, it was verified that the removed substance 21 did not clog the opening portion 16 of the coating film removing mechanism 7, the removed substance 21 containing water flowed in the vicinity of the tip portion 15 of the removing member 8 in the film width direction, and could be sucked in the opening portion 16 without any problem. Further, there was no appearance of reattachment to the end portion of the base film 1. When the film wound by the winding device 5 was analyzed using SEM-EDX, no component of the removed substance was detected.

The results of the respective Examples are summarized in Table **1.**

**Table 1**

| | Example 1 | Example 2 | Example 3 |
|---|---|---|---|
| Film running speed [m/min] | 50 | 50 | 50 |
| Amount of cleaning liquid used per unit area [L/m²] | 0.1 | 0.1 | 0.1 |
| Opening width of opening portion [mm] | 200 | 300 | 8 |
| Proportion of opening width with respect to film width of coated film | 100 | 150 | 4 |
| [%] | | | |
| Whether removed substance could be sucked | ○ | ○ | ○ |
| ○: No attachment to end portion of film | | | |
| ×: With attachment to end portion of film | | | |

### Reference Signs List

- 1: BASE FILM WITH COATING FILM (COATED FILM)
- 2: UNWINDING DEVICE
- 3: COATING FILM
- 4: BASE FILM
- 5: WINDING DEVICE
- 6: CONVEYANCE DEVICE
- 7, 7B: COATING FILM REMOVING MECHANISM
- 8, 8B: REMOVING MEMBER
- 9, 9A, 9B: NOZZLE MEMBER
- 10: TANK
- 11: DISCHARGE PORT
- 12: SUCTION DEVICE
- 13: SPACER MEMBER
- 14: SIDE SURFACE OF NOZZLE MEMBER ON UPSTREAM SIDE
- 15: TIP PORTION
- 16, 16B: OPENING PORTION
- 17: SLIT PORTION
- 18: DECOMPRESSION CHAMBER
- 19: SIDE SURFACE OF TIP PORTION ON DOWNSTREAM SIDE
- 20: PIPE CONNECTION PORTION
- 21: REMOVED SUBSTANCE
- 22: CONVEYANCE DIRECTION SPEED VECTOR
- 23: VECTOR COMPONENT
- 24: SUCTION DIRECTION SPEED VECTOR
- 101: COATING FILM REMOVING EQUIPMENT

## Claims

1. A coating film removing mechanism which is a mechanism for removing a coating film from a coated film that includes the coating film on at least one surface of a base film and is conveyed, the mechanism comprising:
a removing member that includes a tip portion extending in a film width direction, and is for removing the coating film by bringing the tip portion into contact with the coated film; and
a nozzle member disposed on an upstream side of the removing member in a film conveyance direction, wherein
the removing member and the nozzle member constitute a suction nozzle that sucks the coating film removed by the tip portion, and
a side surface of the removing member on a downstream side in the film conveyance direction and a side surface of the nozzle member on an upstream side in the film conveyance direction are inclined so as to approach each other toward the tip portion.

2. The coating film removing mechanism according to claim 1, wherein
the suction nozzle includes:
an opening portion that extends in the film width direction and is opened in a vicinity of the tip portion;
a slit portion that extends in the film width direction and is a flow path communicating with the opening portion; and
a decompression chamber that is a space having a larger cross-sectional area perpendicular to a suction direction than the slit portion.

3. The coating film removing mechanism according to claim 2, wherein
the suction nozzle forms the opening portion, the slit portion, and the decompression chamber with the nozzle member and a side surface of the removing member on the upstream side in the film conveyance direction.

4. The coating film removing mechanism according to claim 2, further comprising
a spacer member between the removing member and the nozzle member, wherein
the nozzle member, the spacer member, and a side surface of the removing member on the upstream side in the film conveyance direction form the opening portion, the slit portion, and the decompression chamber.

5. The coating film removing mechanism according to any one of claims 2 to 4, wherein
an opening width of the opening portion in the film width direction is 4% to 150% with respect to a film width of the coated film to become a target for removing.

6. The coating film removing mechanism according to claim 3, wherein
an angle formed by the coated film and the side surface of the removing member on the upstream side in the film conveyance direction is 30° to 120°.

7. A coating film removing equipment comprising:
an unwinding device for unwinding the coated film wound in a roll;
a winding device for winding the base film with the coating film removed; and
the coating film removing mechanism according to claim 1, the coating film removing mechanism being placed between the unwinding device and the winding device and being for removing the coating film from the coated film to be conveyed.
